(19) Europäisches Patentamt
European Patent Office
Office européen des brevets

(11) **EP 4 199 153 A1**

(12) **EUROPEAN PATENT APPLICATION**
published in accordance with Art. 153(4) EPC

(43) Date of publication:
**21.06.2023 Bulletin 2023/25**

(21) Application number: **22833365.4**

(22) Date of filing: **31.03.2022**

(51) International Patent Classification (IPC):
*H01M 4/525* (2010.01)   *H01M 4/505* (2010.01)
*H01M 10/052* (2010.01)   *H01M 10/44* (2006.01)

(52) Cooperative Patent Classification (CPC):
**H01M 4/505; H01M 4/525; H01M 10/052;
H01M 10/44;** Y02E 60/10

(86) International application number:
**PCT/KR2022/004641**

(87) International publication number:
**WO 2023/277309 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.06.2021 KR 20210085971**

(71) Applicant: **LG Energy Solution, Ltd.
Seoul 07335 (KR)**

(72) Inventors:
• **BAE, Sung Hoon**
  **Daejeon 34122 (KR)**
• **LEE, Young Hwan**
  **Daejeon 34122 (KR)**
• **CHUNG, Mi Kyung**
  **Daejeon 34122 (KR)**
• **PARK, Su Han**
  **Daejeon 34122 (KR)**

(74) Representative: **Hoffmann Eitle
Patent- und Rechtsanwälte PartmbB
Arabellastraße 30
81925 München (DE)**

(54) **LITHIUM SECONDARY BATTERY HAVING IMPROVED LIFESPAN CHARACTERISTICS, DRIVING METHOD THEREFOR, BATTERY MODULE COMPRISING SAME, AND BATTERY PACK COMPRISING BATTERY MODULE**

(57)   The present invention relates to a lithium secondary battery with improved lifetime characteristics, a driving method thereof, a battery module including the same, and a battery pack including the battery module, provides the lithium secondary battery having an operating voltage that is less than a plateau voltage of the lithium/nickel composite oxide, and thus has an advantage of being enable to prevent the lithium/nickel composite oxide from being transferred to a spinel-like structure, suppress the capacity degradation according to an increase in cycle, and improve a lifetime characteristic.

[Fig.1A]

EP 4 199 153 A1

[Fig.1B]

**Description**

[Technical Field]

The present invention relates to a lithium secondary battery with improved lifetime characteristics, a driving method thereof, a battery module including the same, and a battery pack including the battery module. This application claims the benefit of priority based on Korean Patent Application No. 10-2021-0085971, filed on June 30, 2021, and the entire contents of the Korean patent application are incorporated herein by reference.

[Background Art]

Lithium secondary batteries have been used as main power supplies for small devices such as cellular phones and notebook computers, and as the demand for large devices increases, the scope of the Li secondary batteries are increasing to electric vehicles and energy storage devices.

However, since a current level of an energy density is not suitable for application to large devices, research on novel positive electrode materials capable of realizing a high-capacity is being actively conducted to improve the energy density.

In order to achieve a high capacity, a lithium secondary battery including $LiNi_aCo_bMn_cO$ ($0.6 < a \leq 0.9$ and $a+b+c=1$) with a nickel (Ni) content at 60% or more and a lithium/nickel composite oxide of a layered structure as a positive electrode active material is attracting attention. In particular, when the Ni content increases in the positive electrode active material, since the quantity of Li capable entering a Li layer may be two times another transition metal, a capacity of the lithium secondary battery increases.

However, owing to a problem in that degradation of battery characteristics due to degradation in structural stability resulting from the increase in the Ni content in the lithium/nickel composite oxide, particularly, the degradation of the battery characteristics and a decrease in thermal stability in a high-temperature environment seriously occurs, it is an obstacle to commercialization.

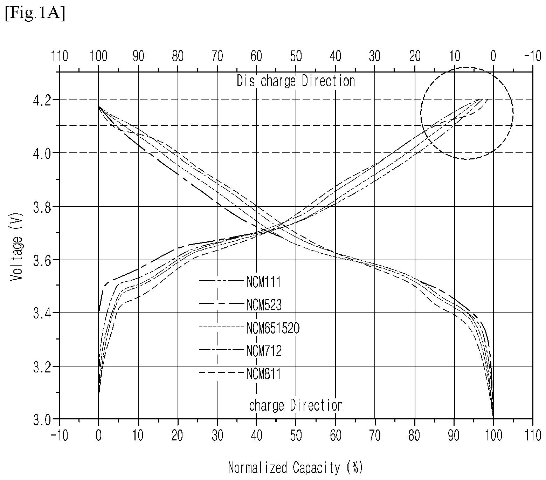

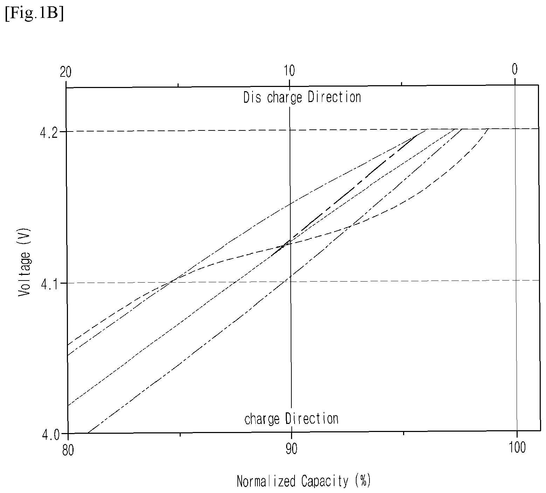

On the other hand, when the lithium/nickel composite oxide is used as the positive electrode active material, during charging at a high voltage (e.g., 4.2 V or higher) based on a potential of a positive electrode, a plateau voltage section occurs in a predetermined region, a large amount of gas such as oxygen and carbon dioxide is generated, and a large capacity of 250 mAh/g or more results (see FIG. 1).

As described above, during charging at the high voltage (e.g., 4.2 V or higher) based on the potential of the positive electrode, some of the remaining Li and transition metals due to excessive deintercalation of Li ions and desorption of oxygen may migrate, and thus a phase transition to a spinel-like structure is inferred.

However, when the lithium secondary battery is charged in the plateau voltage section or at the plateau voltage or higher, as described above, it is transferred to the spinel-like structure, and thus a high output characteristic and cycle durability cannot be secured.

Accordingly, in the lithium secondary battery including the lithium/nickel composite oxide of the layered structure as the positive electrode active material, the development of a lithium secondary battery capable of suppressing capacity degradation due to a cycle increase and improving a lifetime characteristic is required.

[Related Art Document]

[Patent Document]

Korean Patent Laid-Open Application No. 10-2011-0101332

[Disclosure]

[Technical Problem]

An object of the present invention is to provide a lithium secondary battery capable of suppressing capacity degradation due to a cycle increase and improving a lifetime characteristic, in the lithium secondary battery including a lithium/nickel composite oxide of a layered structure as a positive electrode active material.

Another object of the present invention is to provide a method of driving the lithium secondary battery, a battery module including the same, and a battery pack including the battery module.

[Technical Solution]

A lithium (Li) secondary battery according to the present invention includes a positive electrode, a negative electrode, and a separator disposed between the positive electrode and the negative electrode, wherein the positive electrode includes a lithium/nickel composite oxide represented by Chemical Formula 1 below as a positive electrode active material, and the lithium/nickel composite oxide has a plateau voltage ranging from 4.1 V to 4.5 V of a charge/discharge profile, and the lithium secondary battery has an operating voltage that is less than the plateau voltage of the lithium/nickel composite oxide:

[Chemical Formula 1] $\quad Li_x[Ni_yCo_zMn_wM^1_v]O_u$

$M^1$ is at least one doping element selected from the group consisting of W, Cu, Fe, V, Cr, Zr, Zn, Al, In, Ta, Y, La, Sr, Ga, Sc, Gd, Sm, Ca, Ce, Nb, Mg, B, and Mo, and x, y, z, w, v, and u are $1.0 \leq x \leq 1.30$, $0.6 \leq y < 0.95$, $0.01 < z \leq 0.5$, $0.01 < w \leq 0.5$, $0 \leq v \leq 0.2$, and $1.5 \leq u \leq 4.5$, respectively.

The lithium/nickel composite oxide may have an average plateau voltage of 4.2V of a charge/discharge profile, and the operating voltage may be greater than or equal to 3.0 V and less than 4.2 V

The positive electrode active material may include one or more selected from the group consisting of $Li(Ni_{0.6}Co_{0.2}Mn_{0.2})O_2$, $Li(Ni_{0.7}Co_{0.15}Mn_{0.15})O_2$, $Li(Ni_{0.8}Co_{0.1}Mn_{0.1})O_2$, $Li(Ni_{0.9}Co_{0.05}Mn_{0.05})O_2$, $Li(Ni_{0.6}Co_{0.2}Mn_{0.1}Zr_{0.1})O_2$, $Li(Ni_{0.6}Co_{0.2}Mn_{0.15}Zr_{0.05})O_2$, and $Li(Ni_{0.7}Co_{0.1}Mn_{0.1}Zr_{0.1})O_2$.

$M^1$ may be Zr.

The lithium/nickel composite oxide may contain the doping element $M^1$ ranging from 300 ppm to 7,000 ppm.

The positive electrode active material may be the lithium/nickel composite oxide having a layered structure.

When the lithium secondary battery according to the present invention is charged and discharged with 3800 cycles at a temperature of 25 °C, a capacity retention may be 90% or more, and when the lithium secondary battery is charged and discharged with 3400 cycles at a temperature of 45 °C, the capacity retention may be 85% or more.

When the lithium secondary battery is charged and discharged with 3800 cycles at a temperature of 25 °C, a direct current internal resistance (DCIR) increment may be 10% or less.

A driving method of a lithium (Li) secondary battery including a positive electrode, a negative electrode, and a separator disposed between the positive electrode and the negative electrode, the driving method comprising: controlling the lithium secondary battery to have an operating voltage that is less than a plateau voltage of a lithium/nickel composite oxide, wherein the positive electrode includes the lithium/nickel composite oxide represented by Chemical Formula 1 below as a positive electrode active material, and the lithium/nickel composite oxide has a plateau voltage ranging from 4.1 V to 4.5 V of a charge/discharge profile:

[Chemical Formula 1] $\quad Li_x[Ni_yCo_zMn_wM^1_v]O_u$

$M^1$ is at least one doping element selected from the group consisting of W, Cu, Fe, V, Cr, Zr, Zn, Al, In, Ta, Y, La, Sr, Ga, Sc, Gd, Sm, Ca, Ce, Nb, Mg, B, and Mo, and x, y, z, w, v, and u are $1.0 \leq x \leq 1.30$, $0.6 \leq y < 0.95$, $0.01 < z \leq 0.5$, $0.01 < w \leq 0.5$, $0 \leq v \leq 0.2$, and $1.5 \leq u \leq 4.5$, respectively.

The lithium/nickel composite oxide may have a plateau voltage at an average of 4.2V of the charge/discharge profile, and the operating voltage may be greater than or equal to 3.0 V and less than 4.2 V

In addition, a battery module including the above-described lithium secondary battery may be provided.

In addition, a battery pack including the above-described battery module may be provided.

[Advantageous Effects]

The present invention relates to a lithium secondary battery with improved lifetime characteristics, a driving method thereof, a battery module including the same, and a battery pack including the battery module, provides the lithium secondary battery having an operating voltage that is less than a plateau voltage of the lithium/nickel composite oxide, and thus has an advantage of being enable to prevent the lithium/nickel composite oxide from being transferred to a spinel-like structure, suppress the capacity degradation according to an increase in cycle, and improve a lifetime characteristic.

[Brief Description of the Drawings]

FIG. 1a is a graph showing charge/discharge profiles for each composition of lithium/nickel composite oxide (lithium nickel cobalt manganese (NCM)) when the lithium/nickel composite oxide is used as a positive electrode active material of a lithium secondary battery.

FIG. 1b is a graph showing a plateau voltage section of FIG. 1a.

FIG. 2 is a graph showing cycle lifetime performance evaluation of lithium secondary batteries according to Examples and Comparative Example.

FIG. 3 is a graph showing direct current internal resistance (DCIR) characteristics of the lithium secondary batteries according to Examples and Comparative Example.

FIG. 4 is a graph showing a cycle lifetime and DCIR of lithium secondary batteries according to Examples and Comparative Examples in a temperature condition of 25 °C.

FIG. 5 is a graph showing the cycle lifetime and the DCIR of the lithium secondary batteries according to Examples and Comparative Examples in a temperature condition of 45 °C.

[Best Mode]

The present invention may be modified into various forms and may have a variety of embodiments, and therefore, specific embodiments will be described in detail.

The embodiments, however, are not to be taken in a sense which limits the present invention to the specific embodiments and should be construed to include modifications, equivalents, or substituents within the spirit and technical scope of the present invention.

In the present invention, the terms "comprising," "having," or the like are used to specify that a feature, a number, a step, an operation, a component, an element, or a combination thereof described herein exists, and they do not preclude the presence or addition of one or more other features, numbers, steps, operations, components, elements, or combinations thereof.

In addition, in the present invention, when a portion of a layer, a film, a region, a plate, or the like is described as being "on" another portion, this includes not only a case in which the portion is "directly on" another portion but also a case in which still another portion is present between the portion and another portion. Contrarily, when a portion of a layer, a film, a region, a plate, or the like is described as being "under" another portion, this includes not only a case in which the portion is "directly under" another portion but also a case in which still another portion is present between the portion and another portion. In addition, in this application, as being disposed "on" may include the case of being disposed not only on an upper portion but also on a lower portion.

In the present invention, a "state of charge/discharge" means a degree of the remaining capacity capable of being charged or discharged based on a fully charged state of an electrode active material in the secondary battery.

In addition, in the present invention, a "plateau voltage" means a region in which a potential of the electrode active material is kept constant in a reversible capacity region, excluding an beginning and/or an end of charging and discharging in a charge/discharge profile, and means a section in which an absolute value of a slope of the discharge profile is close to zero in a charging/discharging curve.

Hereinafter, the present invention will be described in more detail.

**Lithium secondary battery**

In one embodiment of the present invention, a lithium secondary battery includes a positive electrode, a negative electrode, and a separator disposed between the positive electrode and the negative electrode, wherein the positive electrode includes a lithium/nickel composite oxide represented by Chemical Formula 1 below as a positive electrode active material, and the lithium/nickel composite oxide has a plateau voltage ranging from 4.1 V to 4.5 V of the charge/discharge profile, and the lithium secondary battery has an operating voltage that is less than the plateau voltage of the lithium/nickel composite oxide.

[Chemical Formula 1]     $Li_x[Ni_yCo_zMn_wM^1_v]O_u$

$M^1$ is at least one doping element selected from the group consisting of W, Cu, Fe, V, Cr, Zr, Zn, Al, In, Ta, Y, La, Sr, Ga, Sc, Gd, Sm, Ca, Ce, Nb, Mg, B, and Mo, and x, y, z, w, v, and u are $1.0 \leq x \leq 1.30$, $0.6 \leq y < 0.95$, $0.01 < z \leq 0.5$, $0.01 < w \leq 0.5$, $0 \leq v \leq 0.2$, and $1.5 \leq u \leq 4.5$, respectively.

The lithium secondary battery according to the present invention provides a lithium secondary battery having an operating voltage that is less than the plateau voltage of the lithium/nickel composite oxide that is a positive electrode active material, and the lithium secondary battery has an advantage of preventing a transition of the lithium/nickel composite oxide to a spinel-like structure, suppressing capacity degradation due to a cycle increase, and improving a lifetime characteristic.

In one example, the positive electrode active material may include a lithium/metal composite oxide containing Ni, cobalt (Co), and manganese (Mn), and in some cases, the lithium/metal composite oxide may have a form doped with another transition metal ($M^1$). For example, the positive electrode active material is a positive electrode active material which is reversibly intercalated and deintercalated and may include a lithium/metal composite oxide represented by Chemical Formula 1 as a main component.

In a specific example, more specifically, the positive electrode active material may include one or more selected from the group consisting of $Li(Ni_{0.6}Co_{0.2}Mn_{0.2})O_2$, $Li(Ni_{0.7}Co_{0.15}Mn_{0.15})O_2$, $Li(Ni_{0.8}Co_{0.1}Mn_{0.1})O_2$, $Li(Ni_{0.9}Co_{0.05}Mn_{0.05})O_2$, $Li(Ni_{0.6}Co_{0.2}Mn_{0.1}Zr_{0.1})O_2$, $Li(Ni_{0.6}Co_{0.2}Mn_{0.15}Zr_{0.05})O_2$, and $Li(Ni_{0.7}Co_{0.1}Mn_{0.1}Zr_{0.1})O_2$.

As an example, the positive electrode active material that is a Li metal composite oxide represented by Chemical Formula 1 may use $Li(Ni_{0.7}Co_{0.15}Mn_{0.15})O_2$, $Li(Ni_{0.8}Co_{0.1}Mn_{0.1})O_2$, $Li(Ni_{0.9}Co_{0.05}Mn_{0.05})O_2$, or $Li(Ni_{0.6}Co_{0.2}Mn_{0.1}Zr_{0.1})O_2$ alone or a combination thereof.

In addition, the lithium/nickel composite oxide represented by the positive electrode active material may have a layered structure. In a specific example, unlike other existing positive electrode active materials, lithium oxide of the layered structure has a plateau level of a predetermined section at an oxidation/reduction potential or higher indicated by a change in oxidation number of components in the positive electrode active material.

In a specific example, a plateau voltage of the lithium/nickel composite oxide used as the positive electrode active material may range from 4.1 V to 4.5 V Specifically, the plateau voltage of the lithium/metal composite oxide may range from 4.2 V to 4.4 V, from 4.2 V to 4.3 V, may have an average of 4.2 V

Here, the "plateau voltage" means a region in which a potential of the positive electrode active material is kept constant in a reversible capacity region, excluding an initial and/or an end of charging and discharging in a charge/discharge profile, and means a section in which an absolute value of a slope of the discharge profile is close to zero in a charging/discharging curve. In addition, an "operating voltage" means a voltage of the lithium secondary battery when charged.

On the other hand, when the lithium/nickel composite oxide with a high Ni content is used as the positive electrode active material, a plateau voltage section exhibits in a predetermined region when charged at a high voltage (for example, 4.2 V or higher) based on the potential of the positive electrode, and in the plateau voltage section, some of the remaining Li and transition metals move due to excessive desorption of Li ions and desorption of oxygen, and thus the lithium/nickel composite oxide of a layered structure is transitioned to have a spinel-like structure. Meanwhile, there is a problem in that high output characteristics and a cycle lifetime are degraded due to the structural change of the lithium/nickel composite oxide.

Thus, according to the present invention, in the case of the lithium secondary battery including the lithium/nickel composite oxide having the layered structure of Chemical Formula 1, a material composition and an operating voltage are appropriately adjusted so that it is possible to suppress capacity degradation due to an increase in the number of cycles and increase the lifetime of the secondary battery. Specifically, the lithium secondary battery may have an operating voltage that is less than the plateau voltage section of the positive electrode active material.

In one example, in the lithium secondary battery according to the present invention, when the lithium/nickel composite oxide has a plateau voltage at an average of 4.2 V of the charge/discharge profile, the operating voltage of the lithium secondary battery may be greater than or equal to 3.0 V and less than 4.2V and may range from 3.0 V to 4.15 V or from 3.0 V to 4.1 V Since the operating voltage of the lithium secondary battery is within the above range, the lifetime characteristic can be improved by suppressing capacity degradation while maintaining energy.

In a specific example, a capacity retention of the lithium secondary battery according to the present invention can be improved. For example, when the lithium secondary battery is charged and discharged with 3800 cycles at a temperature of 25 °C, the capacity retention may be 90% or more.

Meanwhile, in the plateau voltage section of the positive electrode active material, a conventional lithium secondary battery may have a capacity retention of less than 90% in the same condition, whereas the lithium secondary battery according to the present invention may have a capacity retention of 90% or more.

In addition, when the lithium secondary battery according to the present invention is charged and discharged with 3800 cycles at a temperature of 45 °C, the capacity retention may be 85% or more. Meanwhile, in the plateau voltage section of the positive electrode active material, a lithium secondary battery may have a capacity retention of less than 85% or 75%, which maximally exhibits in the same condition, whereas the lithium secondary battery according to the present invention may have a capacity retention of 85% or more. Thus, it can be seen that the lithium secondary battery according to the present invention has an excellent high-temperature lifetime characteristic.

Further, in the lithium secondary battery according to the present invention, an increment of direct current internal resistance (DCIR) can be improved. For example, when the lithium secondary battery is charged and discharged at operating voltage with 3800 cycles at a temperature of 25 °C, the increment of DCIR may be 10% or less. On the other hand, in the lithium secondary battery in the plateau voltage section of the positive electrode active material, the increment of DCIR may exceed 20% in the same condition.

That is, when compared to the existing lithium secondary battery, the lithium secondary battery according to the present invention has a significantly reduced DCIR increase rate, and thus the lithium secondary battery may exhibit an excellent battery characteristic.

The above facts are supported by experimental examples which will be described below.

In addition, as described above, the positive electrode active material according to the present invention may include the lithium/nickel composite oxide having the layered structure of Chemical Formula 1. In this case, the doping element $M^1$ may be Zr.

In another example, the lithium/nickel composite oxide may contain the doping element $M^1$ ranging from 300 ppm to 7,000 ppm. In a specific example, based on the total weight of the lithium/nickel composite oxide, a raw material containing the doping element $M^1$ may be included in the range of 500 ppm to 7,000 ppm, 1000 ppm to 6,500 ppm, 2,000 ppm to 6,000 ppm, 4,000 ppm to 6,000 ppm, 5,000 ppm to 5,500, or 5,000 ppm. By including the raw material containing the doping element $M^1$ in the above range, surface resistance may be increased, a deintercalation rate of Li ions may be lowered, thereby an effect of improving structural stability and a lifetime of the battery manufactured can be achieved.

As described above, the doping element $M^1$ may be Zr, and the raw material containing the doping element $M^1$ may be ZrO.

Meanwhile, the positive electrode includes a positive electrode mixture layer manufactured by applying, drying, and pressing a positive electrode slurry containing the positive electrode active material on a positive electrode current collector, and the positive electrode mixture layer may optionally further include a conductive material, a binder, and an additive, as necessary.

A content of the positive electrode active material may be 85 to 95 parts by weight based on the positive electrode mixture layer of 100 parts by weight, specifically, may be 88 to 95 parts by weight, 90 to 95 parts by weight, 86 to 90 parts by weight, or 92 to 95 parts by weight.

In addition, the conductive material is used to improve electrical performance of the positive electrode and that commonly used in the art may be applied. Specifically, the conductive material may include one or more selected from the group consisting of natural graphite, artificial graphite, carbon black, acetylene black, denka black, ketjen black, super-p, channel black, furnace black, lamp black, summer black, graphene and carbon nanotubes.

As an example, the conductive material may use carbon black or denka black alone or in a combination thereof.

In addition, the conductive material may be included in an amount of 0.1 to 5 parts by weight based on the positive electrode mixture layer 100 parts by weight, and specifically, may be included in an amount of 0.1 to 4 parts by weight, 2 to 4 parts by weight, 1.5 to 5 parts by weight, 1 to 3 parts by weight, 0.1 to 2 parts by weight, or 0.1 to 1 part by weight.

In addition, the binder serves to bind the positive electrode active material, the positive electrode additive, and the conductive material to each other, and as long as it has such a function, the binder can be used without particular limitation. Specifically, the binder may include at least one resin selected from the group consisting of polyvinylidenefluoride-hexafluoropropylene copolymer (PVdF-co-HFP), PVdF, polyacrylonitrile, polymethylmethacrylate, and a copolymer thereof. As an example, the binder may include polyvinylidenefluoride.

In addition, the binder of 1 to 10 parts by weight may be included based on the mixture layer of 100 parts by weight, and specifically, may be included of 2 to 8 parts by weight, or 1 to 5 parts by weight may be included.

In addition, an average thickness of the mixture layer is not particularly limited, and specifically, the average thickness may range 50 μm to 300 μm, and more specifically, 100 μm to 200 μm, 80 μm to 150 μm, 120 μm to 170 μm, 150 μm to 300 μm, 200 μm to 300 μm, or 150 μm to 190 μm.

In addition, the positive electrode may use as the positive electrode current collector having high conductivity without causing a chemical change in the battery. For example, stainless steel, aluminum, nickel, titanium, and calcined carbon may be used, and aluminum or stainless steel having a surface treated with carbon, nickel, titanium, and silver may be used. In addition, fine irregularities may be formed on a surface of the positive electrode current collector to enhance a bonding force of the positive electrode active material, and the positive electrode current collector may be used in various forms such as a film, a sheet, a foil, a net, a porous body, a foam, and nonwoven fabric. In addition, an average thickness of the positive electrode current collector may be appropriately applied in the range of 3 μm to 500 μm in consideration of conductivity and a total thickness of the positive electrode to be manufactured.

In addition, the negative electrode of the lithium secondary battery according to the present invention is manufactured by applying, drying, and pressing a negative electrode active material on a negative electrode current collector and may further include the same conductive material as in the positive electrode, an organic binder polymer, and an additive.

In addition, the negative active material may include, for example, a carbon material and a silicon material. The carbon material means a carbon material containing carbon atoms as a main component. The carbon material may include one or more selected from the group consisting of graphite with a completely layered crystal structure as natural graphite, soft carbon with a low crystallinity layered crystal structure (a graphene structure is a structure in which hexagonal honeycomb planes of carbon are disposed in layers), hard carbon in which the graphene structure is mixed with amorphous portions), artificial graphite, expanded graphite, carbon fiber, non-graphitized carbon, carbon black, acetylene black, ketjen black, carbon nanotubes, fullerene, activated carbon, graphene, and carbon nanotubes. More preferably, the carbon material may include natural graphite and/or artificial graphite and may include any one or more of graphene and carbon nanotubes together with the natural graphite and/or the artificial graphite. In this case, the carbon material may include graphene and/or carbon nanotubes of 0.1 to 10 parts by weight based on the total carbon material of 100 parts by weight, and more specifically, the carbon material may include graphene and/or carbon nanotubes of 0.1 to 5 parts by weight or 0.1 to 2 parts by weight based on the total carbon material of 100 parts by weight.

In addition, the silicon material is particles including, as a main component, silicon (Si) as a metal component and may include one or more of Si particles and silicon oxide (SiOx and $1 \leq X \leq 2$) particles. As an example, the silicon material may include Si particles, silicon monoxide (SiO) particles, silicon dioxide (SiO$_2$) particles, or a mixture thereof.

In addition, the silicon material may have a mixed form of crystalline particles and amorphous particles, and a ratio of the amorphous particles is 50 to 100 parts by weight, specifically, 50 to 90 parts by weight, 60 to 80 parts by weight, or 85 to 100 parts by weight based on the total silicon material of 100 parts by weight. In the present invention, the ratio of the amorphous particles contained in the silicon material is controlled to the above ranges so that thermal stability and flexibility can be improved without degradation of electrical properties of the electrode.

In addition, the silicon material includes a carbon material and a silicon material and may be included of 1 to 20 parts by weight, and specifically, 5 to 20 parts by weight, 3 to 10 parts by weight, 8 to 15 parts by weight, 13 to 18 parts by weight, or 2 to 7 parts by weight based on the negative electrode mixture layer of 100 parts by weight.

In the present invention, the content of the carbon material and the silicon material included in the negative electrode active material is adjusted to the above ranges so that it is possible to improve a charging capacity per unit mass while reducing Li consumption and irreversible capacity loss during the initial charging and discharging of the battery.

As an example, the negative active material may include graphite of $95 \pm 2$ parts by weight and a mixture of $5 \pm 2$ parts by weight in which SiO particles and SiO$_2$ particles are uniformly mixed based on the negative electrode mixture layer of 100 parts by weight. In the present invention, the content of the carbon material and the silicon material included in the negative electrode active material is adjusted to the above ranges so that it is possible to improve a charging capacity per unit mass while reducing Li consumption and irreversible capacity loss during the initial charging and discharging of the battery.

In addition, the negative electrode mixture layer may have an average thickness ranging from 100 $\mu$m to 200 $\mu$m, and specifically, from 100 $\mu$m to 180 $\mu$m, from 100 $\mu$m to 150 $\mu$m, from 120 $\mu$m to 200 $\mu$m, from 140 $\mu$m to 200 $\mu$m, or from 140 $\mu$m to 160 $\mu$m.

In addition, the negative electrode current collector is not particularly limited as long as it has high conductivity without causing a chemical change in the battery, and for example, copper, stainless steel, Ni, titanium, and calcined carbon may be used as the negative electrode current collector, and the copper or the stainless steel having a surface treated with carbon, nickel, titanium, or silver may be used. In addition, like the positive electrode current collector, fine irregularities may be formed on a surface of the negative electrode current collector to enhance a bonding force with the negative electrode active material, and the negative electrode current collector may be used in various forms such as a film, a sheet, a foil, a net, a porous body, a foam, and nonwoven fabric. In addition, an average thickness of the negative electrode current collector may be appropriately applied in the range of 3 $\mu$m to 500 $\mu$m in consideration of conductivity and a total thickness of the negative electrode to be manufactured.

In addition, the separator is interposed between the positive electrode and the negative electrode, and an insulating thin film having high ion permeability and high mechanical strength is used as the separator. The separator is not particularly limited as long as it is generally used in the art, and specifically, polypropylene having chemical resistance and hydrophobicity, a glass fiber, or a sheet or nonwoven fabric made of polyethylene may be used as the separator. In some cases, a composite separator in which a porous polymer base material such as the sheet or nonwoven fabric is coated with inorganic particles/organic particles by an organic binder polymer may be used the separator. When a solid electrolyte such as a polymer is used as the electrolyte, the solid electrolyte may also serve as the separator. In addition, the separator may have an average pore diameter ranging from 0.01 $\mu$m to 10 $\mu$m, and an average thickness ranging from 5 $\mu$m to 300 $\mu$m.

Meanwhile, the positive electrode and the negative electrode may be wound in the form of a jelly roll and accommodated in a cylindrical battery, a square-shaped battery, or a pouch-type battery or may be accommodated in a pouch-type battery in a folding or stack- and-folding form, but the present invention is not limited thereto.

In addition, the electrolyte containing a Li salt according to the present invention may be made of an electrolyte and a Li salt, and a non-aqueous organic solvent, an organic solid electrolyte, or an inorganic solid electrolyte may be used as the electrolyte.

For example, as the non-aqueous organic solvent, an aprotic organic solvent such as N-methyl-2-pyrrolidinone, ethylene carbonate, propylene carbonate, butylene carbonate, dimethyl carbonate, diethyl carbonate, gamma-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxymethane, a dioxolane derivative, sulfolane, methyl sulfolane, 1,3-dimethyl-2-imidazolidinone, a propylene carbonate derivative, a tetrahydrofuran derivative, ether, methyl pyropionate, or ethyl propionate may be used.

For example, as the organic solid electrolyte, a polyethylene derivative, a polyethylene oxide derivative, a polypropylene oxide derivative, a phosphate ester polymer, poly aginate lysine, polyester sulfide, polyvinyl alcohol (PVA), polyvinylidene fluoride, or a polymer containing an ionic dissociation group may be used.

Nitride, halide, or sulfate of Li such as $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, or $Li_3PO_4$-$Li_2S$-$SiS_2$ may be used as the inorganic solid electrolyte.

The Li salt is a material that is easily soluble in a non-aqueous electrolyte. For example, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, Li chloroborane, Li lower aliphatic carboxylate, Li tetraphenylboronate, or imide may be used as the Li salt.

In addition, for the purpose of improving charging/discharging characteristics and flame retardancy, for example, pyridine, triethylphosphite, triethanolamine, cyclic ether, ethylene diamine, n-glyme, hexaphosphoric acid triamide, nitrobenzene derivative, sulfur, quinone imine dye, N-substituted oxazolidinone, N,N- Substituted imidazolidine, ethylene glycol dialkyl ether, ammonium salt, pyrrole, 2-methoxyethanol, or aluminum trichloride may be added to the electrolyte. In some cases, in order to impart incombustibility, a halogen-containing solvent such as carbon tetrachloride or ethylene trifluoride may be further included, and in order to improve a high-temperature preservation characteristic, a carbon dioxide gas may be further included, and fluoro-ethylene carbonate (FEC) or propene sultone (PRS) may be further included.

In addition, the positive electrode and the negative electrode may be wound in the form of a jelly roll and accommodated in a cylindrical battery, a square-shaped battery, or a pouch-type battery or may be accommodated in a pouch-type battery in a folding or stack- and-folding form. For example, the lithium secondary battery according to the present invention may be a pouch-type battery.

As described above, since the lithium secondary battery including the positive electrode active material according to the present invention stably exhibits an excellent discharge capacity, an output characteristic, and a capacity retention, the lithium secondary battery is useful in the fields of portable devices such as mobile phones, notebook computers, and digital cameras, and electric vehicles (EVs) such as hybrid EVs (HEVs).

**Driving method of lithium secondary battery**

In one embodiment of the present invention, a driving method of a lithium secondary battery including a positive electrode, a negative electrode, and a separator disposed between the positive electrode and the negative electrode is provided, the driving method including controlling the lithium secondary battery to have an operating voltage that is less than the plateau voltage of the lithium/nickel composite oxide, wherein the positive electrode includes a lithium/nickel composite oxide represented by Chemical Formula 1 below as a positive electrode active material, and the lithium/nickel composite oxide has a plateau voltage ranging from 4.2 V to 4.5 V of the charge/discharge profile.

[Chemical Formula 1]     $Li_x[Ni_yCo_zMn_wM^1_v]O_u$

$M^1$ is at least one doping element selected from the group consisting of W, Cu, Fe, V, Cr, Zr, Zn, Al, In, Ta, Y, La, Sr, Ga, Sc, Gd, Sm, Ca, Ce, Nb, Mg, B, and Mo, and x, y, z, w, v, and u are $1.0 \leq x \leq 1.30$, $0.6 \leq y < 0.95$, $0.01 < z \leq 0.5$, $0.01 < w \leq 0.5$, $0 \leq v \leq 0.2$, and $1.5 \leq u \leq 4.5$, respectively.

The driving method of a lithium secondary battery according to the present invention includes the controlling of the operating voltage to be less than a plateau voltage of the lithium/nickel composite oxide during charging and discharging so that there is an advantage of being able to prevent a transition of the lithium/nickel composite oxide to a spinel-like structure, suppress capacity degradation due to a cycle increase, and improve a lifetime characteristic.

In a specific example, a plateau voltage of the lithium/nickel composite oxide used as the positive electrode active material may range from 4.2 V to 4.5 V Specifically, the plateau voltage of the lithium/metal composite oxide may range from 4.2 V to 4.4 V, from 4.2 V to 4.3 V, may have an average of 4.2 V

In one example, the operating voltage of the lithium secondary battery according to the present invention may be greater than or equal to 3.0 V and less than 4.2V and may range from 3.0 V to 4.15 V or 3.0 V to 4.1 V Since the operating voltage of the lithium secondary battery is within the above range, the lifetime characteristic can be improved by suppressing capacity degradation while maintaining energy.

**Battery Module and Battery Pack**

In one embodiment of the present invention, a battery module including the above-described lithium secondary battery is provided.

In addition, in one embodiment of the present invention, a battery pack including the above-described battery module is provided.

In a specific example, the lithium secondary battery according to the present invention may be used in, particularly, a high-output and high-capacity battery requiring long lifetime and excellent durability, or a battery module or a battery pack including a plurality of such batteries as a unit battery.

The battery pack may be used as a power source for medium-large devices requiring high-temperature stability, long cycle characteristics, and high rate characteristics. Specific examples of the medium-large devices include power tools driven by receiving power by an electric motor, EVs including EVs, HEVs, and plug-in HEVs (PHEVs), electric two-wheeled vehicles including electric bicycles (E-bikes) and electric scooters (E-scooters), electric golf carts, electric trucks, and electric commercial vehicles or systems for power storage.

The structure and the manufacturing method of the medium-large battery module or the medium-large battery pack are known in the art, and thus a detailed description thereof will be omitted herein.

[Detailed Description of the Preferred Embodiments]

Hereinafter, the present invention will be described in more detail with reference to examples and experimental examples.

However, the following examples and experimental examples are merely illustrative of the present invention, and the content of the present invention is not limited to the following examples and experimental examples.

**Manufacturing Example: Manufacturing of lithium secondary battery**

$LiNi_{0.8}Co_{0.1}Mn_{0.1}O_2$ of 96 parts by weight for a positive electrode active material, polyvinylidene fluoride (PVdF) of 2 parts by weight for a binder, and carbon black of 2 parts by weight for a conductive material were weighed and mixed in an N-methylpyrrolidone (NMP) solvent to prepare a slurry for the positive electrode mixture layer. An aluminum foil was coated with the slurry for the positive electrode mixture layer, dried, and then rolled to form the positive electrode having the positive electrode mixture layer (an average thickness: 130 $\mu$m). Meanwhile, a plateau voltage of the positive electrode active material was 4.2 V

Separately, natural graphite of 87 parts by weight for a carbon-based active material, SiO of 7 parts by weight for a silicon-based active material, carbon black of 3 parts by weight for a conductive material, and styrene butadiene rubber (SBR) of 3 parts by weight for a binder were mixed with N-methylpyrrolidone solvent to prepare a slurry for the negative electrode mixture layer, and a copper foil was coated with the slurry to manufacture a negative electrode having a negative electrode mixture layer (an average thickness: 180 $\mu$m).

A separator (a thickness: about 16 $\mu$m) made of a porous polyethylene (PE) film was interposed and stacked between the manufactured positive electrode and the manufactured negative electrode so that an electrode assembly was manufactured. The electrode assembly was located inside the battery case, the electrolyte was injected into the battery case, and then the electrode assembly is left at room temperature for three days to be fully impregnated with the electrolyte so that a lithium secondary battery was manufactured. In this case, the electrolyte was prepared by dissolving Li hexafluorophosphate (LiPF$_6$) at a concentration of 1.0M in an organic solvent consisting of ethylene carbonate/dimethyl carbonate/ethylmethyl carbonate (a mixing volume ratio of EC/DMC/EMC is 3/4/3).

**Examples 1 and 2 and Comparative Example 1**

The lithium secondary battery manufactured as described above was charged in the following conditions, and then is discharged to perform activation (C-rate=0.1C).

Then, an operating voltage range of the Li lithium secondary battery was set as shown in Table 1 below and a cycle was performed.

[Table 1]

|  | Charging voltage | Operating voltage |
|---|---|---|
| Example 1 | 4.1 V | 3.0 Vto 4.1 V |
| Example 2 | 4.15 V | 3.0 V to 4.15 V |
| Comparative Example 1 | 4.2 V | 3.0 Vto 4.2 V |

**Experimental Example**

In order to evaluate performance of the lithium secondary battery according to the present invention, the following experiment was performed.

A) Evaluation of cycle lifetime performance

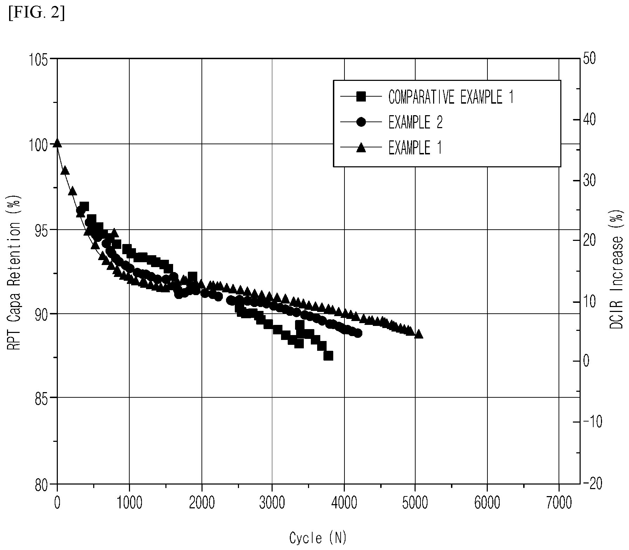

After discharging each of the lithium secondary batteries of Examples 1 and 2 and Comparative Example 1 to 0.1C, a minimum of 3800 cycles were performed in a set operating voltage range to measure each capacity. The measurement results were shown in FIG. 2, and a charge/discharge capacity retention was calculated after no more than 3800 cycles of the charging and discharging were performed.
The capacity retention was defined by Formula 1 below, and the results were shown in Table 2.

[Formula 1]

capacity retention (%) = (discharging capacity at $N^{th}$ charging and discharging/discharging capacity at the initial charging and discharging) $\times$ 100

B) Evaluation of DCIR characteristic

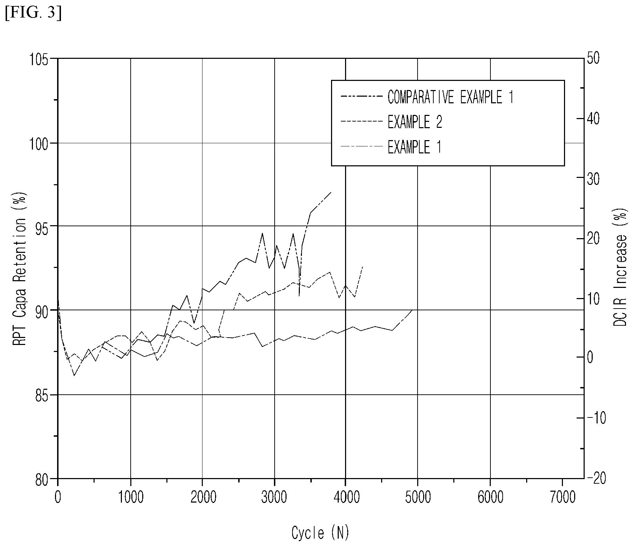

A DCIR evaluation experiment for the lithium secondary batteries of the Examples 1 and 2 and Comparative Example 1 was performed as follows.
A minimum of 3800 cycles were performed on each lithium secondary battery, and DCIR evaluation was performed at every 100 cycles. In this case, the DCIR may be measured by the reference performance test (RPT) method. The RPT method measures a slope of a voltage variance with respect to an applied current amount using a method in which, for example, discharging is performed at 0.2C for ten seconds in a state of SOC 50% and then replenished with the same capacity, discharging is performed at 0.5C for ten seconds and then replenished with the same capacity, and discharging is performed at 1C for ten seconds and then replenished with the same capacity. As described above, DCIR during the discharging or DCIR during the charging may be measured, and FIG. 3 shows DCIR during the discharging. when the total charge capacity of the battery is 100%, SOC 50% means a state in which the battery is charged to a 50% charging capacity.
In addition, the results were shown in FIG. 3, and the DCIR increase rate was shown in Table 2.

[Table 2]

|  | Charging voltage | Operating voltage | Capacity retention | DCIR increment rate |
|---|---|---|---|---|
| Example 1 | 4.1 V | 3.0 V to 4.1 V | 91.0% | 4.4% |
| Example 2 | 4.15 V | 3.0 V to 4.15 V | 90.2% | 6.9% |
| Comparative Example 1 | 4.2 V | 3.0 V to 4.2 V | 87.5% | 22.0% |

Referring to FIG. 2 and Table 2, it can be seen that, when compared to the lithium secondary battery of Comparative Example 1, the lithium secondary batteries of Examples 1 and 2 had significantly higher capacity retention with the cycle progress, and the DCIR increase rate was significantly reduced to 10% or less with the cycle progress.

C) Evaluation of high-temperature cycle lifetime and DCIR characteristic

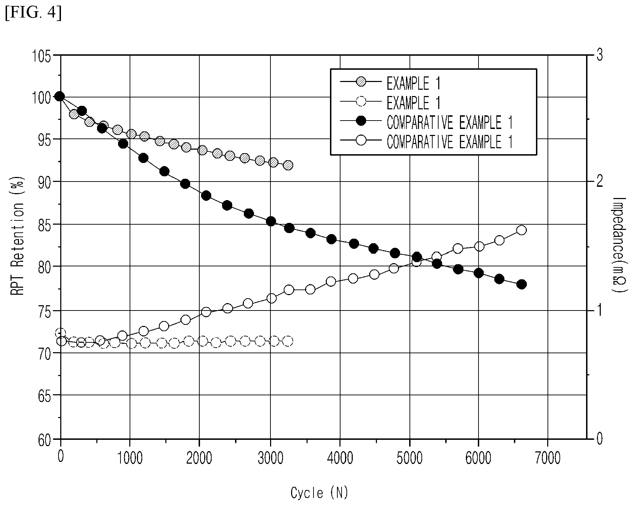

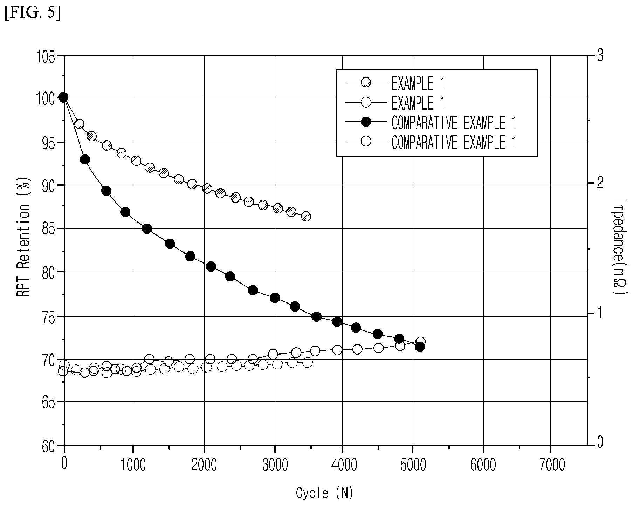

Cycle lifetime and DCIR evaluation experiments were performed on the lithium secondary batteries of Example 1 and Comparative Example 1 at high temperature (45 °C) as follows.
Each evaluation condition was shown in Table 3 below, and the evaluation method has been described above, and thus a description thereof will be omitted herein. The terms "MOL" and "EOL" represent respectively middle of life cycle, and end of lifecycle. In addition, the results were shown in FIGS. 4 and 5 and Table 3.

[Table 3]

| | Charging voltage | Operating voltage | number of cycle in RPT | Capacity retention | DCIR (mOhm) | | |
|---|---|---|---|---|---|---|---|
| | | | | | 2nd RPT | MOL or EOL | Increment rate |
| Example 1 | 4.1 V | 3.0 V to 4.1 V | 3200 cycles | 91.6% | 0.75 | 0.76 | 1.9 |
| Comparative Example 1 | 4.2 V | 3.0 V to 4.2 V | 6600 cycles | 70.6% | 0.74 | 1.62 | 118.9 |
| Example 1 | 4.1 V | 3.0 V to 4.1 V | 3400 cycles | 86.4% | 0.58 | 0.65 | 11.2 |
| Comparative Example 1 | 4.2 V | 3.0 V to 4.2 V | 5100 cycles | 68.1% | 0.79 | 0.79 | 41.1 |

Referring to FIGS. 4 and 5, and Table 3, it can be seen that, when compared to the lithium secondary battery of Comparative Example 1, the lithium secondary batteries of the Example 1 have a higher capacity retention at a high temperature and a significantly lower DCIR increment rate with the cycle progress.

According to these results, the lithium secondary batteries of Example 1 have an operating voltage that is less than the plateau voltage of the lithium/nickel composite oxide, and thus it is possible to prevent the lithium/nickel composite oxide from being transferred to a spinel-like structure, and accordingly, the lifetime characteristic can be improved while suppressing the capacity degradation according to an increase in cycle.

Although the description has been made with reference to the exemplary embodiments of the present invention, it should be understood that various alternations and modifications of the present invention can be devised by those skilled in the art to which the present invention pertains without departing from the spirit and scope of the present invention, which are defined by the appended claims.

Therefore, the technical scope of the present invention should not be limited to the contents described in the detailed description of this specification, but should be determined by the scope of the appended claims.

## Claims

1. A lithium secondary battery comprising:

a positive electrode;
a negative electrode; and
a separator disposed between the positive electrode and the negative electrode,
wherein the positive electrode includes a lithium/nickel composite oxide represented by Chemical Formula 1 below as a positive electrode active material, and the lithium/nickel composite oxide has a plateau voltage ranging from 4.1 V to 4.5 V of a charge/discharge profile, and
the lithium secondary battery has an operating voltage that is less than the plateau voltage:

[Chemical Formula 1] $Li_x[Ni_yCo_zMn_wM^1{}_v]O_u$,

$M^1$ is at least one doping element selected from the group consisting of W, Cu, Fe, V, Cr, Zr, Zn, Al, In, Ta, Y, La, Sr, Ga, Sc, Gd, Sm, Ca, Ce, Nb, Mg, B, and Mo, and
x, y, z, w, v, and u are $1.0 \leq x \leq 1.30$, $0.6 \leq y < 0.95$, $0.01 < z \leq 0.5$, $0.01 < w \leq 0.5$, $0 \leq v \leq 0.2$, and $1.5 \leq u \leq 4.5$, respectively.

2. The lithium secondary battery of claim 1, wherein:

the lithium/nickel composite oxide has a plateau voltage at an average of 4.2V of the charge/discharge profile; and
the operating voltage is greater than or equal to 3.0 V and less than 4.2 V.

3. The lithium secondary battery of claim 1, wherein the positive electrode active material includes one or more selected from the group consisting of $Li(Ni_{0.6}Co_{0.2}Mn_{0.2})O_2$, $Li(Ni_{0.7}Co_{0.15}Mn_{0.15})O_2$, $Li(Ni_{0.8}Co_{0.1}Mn_{0.1})O_2$, $Li(Ni_{0.9}Co_{0.05}Mn_{0.05})O_2$, $Li(Ni_{0.6}Co_{0.2}Mn_{0.1}Zr_{0.1})O_2$, $Li(Ni_{0.6}Co_{0.2}Mn_{0.15}Zr_{0.05})O_2$, and $Li(Ni_{0.7}Co_{0.1}Mn_{0.1}Zr_{0.1})O_2$.

4. The lithium secondary battery of claim 1, wherein a doping element $M^1$ includes Zr.

5. The lithium secondary battery of claim 4, wherein the lithium/nickel composite oxide contains the doping element $M^1$ ranging from 300 ppm to 7,000 ppm.

6. The lithium secondary battery of claim 1, wherein the positive electrode active material has a layered structure.

7. The lithium secondary battery of claim 1, wherein, when the lithium secondary battery is charged and discharged with 3800 cycles at a temperature of 25 °C, a capacity retention is 90% or more.

8. The lithium secondary battery of claim 1, wherein, when the lithium secondary battery is charged and discharged with 3400 cycles at a temperature of 45 °C, a capacity retention is 85% or more.

9. The lithium secondary battery of claim 1, wherein, when the lithium secondary battery is charged and discharged with 3800 cycles at a temperature of 25 °C, a direct current internal resistance (DCIR) increment is 10% or less

10. A driving method of a lithium secondary battery including a positive electrode, a negative electrode, and a separator disposed between the positive electrode and the negative electrode, the driving method comprising:

    controlling the lithium secondary battery to have an operating voltage that is less than a plateau voltage of a lithium/nickel composite oxide,
    wherein the positive electrode includes the lithium/nickel composite oxide represented by Chemical Formula 1 below as a positive electrode active material, and the lithium/nickel composite oxide has a plateau voltage ranging from 4.1 V to 4.5 V of a charge/discharge profile:

    $$[\text{Chemical Formula 1}] \qquad Li_x[Ni_yCo_zMn_wM^1_v]O_u,$$

    $M^1$ is at least one doping element selected from the group consisting of W, Cu, Fe, V, Cr, Zr, Zn, Al, In, Ta, Y, La, Sr, Ga, Sc, Gd, Sm, Ca, Ce, Nb, Mg, B, and Mo, and
    x, y, z, w, v, and u are $1.0 \leq x \leq 1.30$, $0.6 \leq y < 0.95$, $0.01 < z \leq 0.5$, $0.01 < w \leq 0.5$, $0 \leq v \leq 0.2$, and $1.5 \leq u \leq 4.5$, respectively.

11. The driving method of claim 10, wherein:

    the lithium/nickel composite oxide has a plateau voltage at an average of 4.2V of the charge/discharge profile; and
    the operating voltage is greater than or equal to 3.0 V and less than 4.2 V.

12. A battery module comprising the lithium secondary battery according to claim 1.

13. A battery pack comprising the battery module according to claim 12.

14. The battery pack of claim 13 that is used as s power source for medium-large devices.

[Fig.1A]

[Fig.1B]

[FIG. 2]

[FIG. 3]

[FIG. 4]

[FIG. 5]

| INTERNATIONAL SEARCH REPORT | International application No. |
|---|---|
| | **PCT/KR2022/004641** |

**A.    CLASSIFICATION OF SUBJECT MATTER**

**H01M 4/525**(2010.01)i; **H01M 4/505**(2010.01)i; **H01M 10/052**(2010.01)i; **H01M 10/44**(2006.01)i

According to International Patent Classification (IPC) or to both national classification and IPC

**B.    FIELDS SEARCHED**

Minimum documentation searched (classification system followed by classification symbols)

H01M 4/525(2010.01); H01M 10/052(2010.01); H01M 10/42(2006.01); H01M 4/505(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬전지 (lithium battery), 리튬니켈복합산화물 (lithium nickel complex oxide), 작동 전압 (operating voltage), 평탄전위 (plateau voltage), 층상 (layered), 충방전 프로파일 (charge/discharge profile)

**C.    DOCUMENTS CONSIDERED TO BE RELEVANT**

| Category* | Citation of document, with indication, where appropriate, of the relevant passages | Relevant to claim No. |
|---|---|---|
| A | KR 10-1991057 B1 (LG CHEM, LTD.) 19 June 2019 (2019-06-19)<br>See abstract; paragraph [0108]; and claims 1, 2, 7, 8 and 14. | 1-14 |
| A | KR 10-2020-0107856 A (LG CHEM, LTD.) 16 September 2020 (2020-09-16)<br>See entire document. | 1-14 |
| A | LI, J. et al. Study of the failure mechanisms of LiNi0.8Mn0.1Co0.1O2 cathode material for lithium ion batteries. Journal of The Electrochemical Society. 2015, vol. 162, no. 7, pp. A1401-A1408.<br>See entire document. | 1-14 |
| A | KR 10-2019-0078498 A (POSCO et al.) 04 July 2019 (2019-07-04)<br>See entire document. | 1-14 |
| A | KR 10-2008-0080444 A (SANYO ELECTRIC CO., LTD.) 04 September 2008 (2008-09-04)<br>See entire document. | 1-14 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 July 2022** | **18 July 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

<table>
<tr><td colspan="2" align="center"><b>INTERNATIONAL SEARCH REPORT</b></td><td colspan="2">International application No.<br><b>PCT/KR2022/004641</b></td></tr>
<tr><td colspan="4"><b>C.     DOCUMENTS CONSIDERED TO BE RELEVANT</b></td></tr>
<tr><td>Category*</td><td colspan="2">Citation of document, with indication, where appropriate, of the relevant passages</td><td>Relevant to claim No.</td></tr>
<tr><td>A</td><td colspan="2">KR 10-2011-0115844 A (LG CHEM, LTD.) 24 October 2011 (2011-10-24)<br>See entire document.</td><td>1-14</td></tr>
</table>

Form PCT/ISA/210 (second sheet) (July 2019)

| | INTERNATIONAL SEARCH REPORT<br>Information on patent family members | | International application No.<br>**PCT/KR2022/004641** | |
| --- | --- | --- | --- | --- |

| Patent document<br>cited in search report | | | Publication date<br>(day/month/year) | Patent family member(s) | | | Publication date<br>(day/month/year) |
| --- | --- | --- | --- | --- | --- | --- | --- |
| KR | 10-1991057 | B1 | 19 June 2019 | KR | 10-2017-0025875 | A | 08 March 2017 |
| KR | 10-2020-0107856 | A | 16 September 2020 | CN | 113678286 | A | 19 November 2021 |
| | | | | EP | 3876315 | A1 | 08 September 2021 |
| | | | | EP | 3876315 | A4 | 01 December 2021 |
| | | | | US | 2022-0029152 | A1 | 27 January 2022 |
| | | | | WO | 2020-180160 | A1 | 10 September 2020 |
| KR | 10-2019-0078498 | A | 04 July 2019 | CN | 111771303 | A | 13 October 2020 |
| | | | | EP | 3734720 | A1 | 04 November 2020 |
| | | | | EP | 3734720 | A4 | 14 April 2021 |
| | | | | JP | 2021-509220 | A | 18 March 2021 |
| | | | | JP | 7008828 | B2 | 25 January 2022 |
| | | | | KR | 10-2177049 | B1 | 10 November 2020 |
| | | | | WO | 2019-132332 | A1 | 04 July 2019 |
| KR | 10-2008-0080444 | A | 04 September 2008 | CN | 101257134 | A | 03 September 2008 |
| | | | | CN | 101257134 | B | 05 September 2012 |
| | | | | JP | 2008-218062 | A | 18 September 2008 |
| | | | | JP | 5052161 | B2 | 17 October 2012 |
| | | | | US | 2008-0213665 | A1 | 04 September 2008 |
| KR | 10-2011-0115844 | A | 24 October 2011 | KR | 10-1520118 | B1 | 13 May 2015 |

Form PCT/ISA/210 (patent family annex) (July 2019)

**EP 4 199 153 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020210085971
- KR 1020110101332